# NEUE EUROPÄISCHE PATENTSCHRIFT

(11) **EP 1 029 722 B2**
(45) Veröffentlichungstag und Bekanntmachung des Hinweises auf die Entscheidung über den Einspruch: **30.07.2008**
(45) Hinweis auf die Patenterteilung: 13.08.2003
(21) Anmeldenummer: 00102191.4
(22) Anmeldetag: 09.02.2000
(51) Int. Cl.: B60H 1/03

(54) **Heizungskreislauf für Kraftfahrzeuge**
Heating circuit for motor vehicles
Circuit de chauffage pour véhicules à moteurs

(30) Priorität: 17.02.1999 DE 19906523
(43) Veröffentlichungstag der Anmeldung: 23.08.2000
(73) Patentinhaber: Volkswagen Aktiengesellschaft, 38436 Wolfsburg (DE)
(72) Erfinder: Pott, Ekkehard, Dr., 38518 Gifhorn (DE)
(74) Vertreter: Schneider, Henry

(56) Entgegenhaltungen:
- EP-A- 0 511 531
- DE-A- 3 447 182
- DE-A- 3 612 672
- DE-A- 4 446 152
- DE-A1- 4 424 470
- DE-C1- 4 307 841
- DE-C1- 4 314 089
- DE-C2- 4 123 678
- US-A- 4 892 248
- US-A- 5 123 594
- US-A- 5 211 333

## Beschreibung

Die Erfindung betrifft einen Heizungskreislauf mit einer Zusatz-Heizvorrichtung für Kraftfahrzeuge.

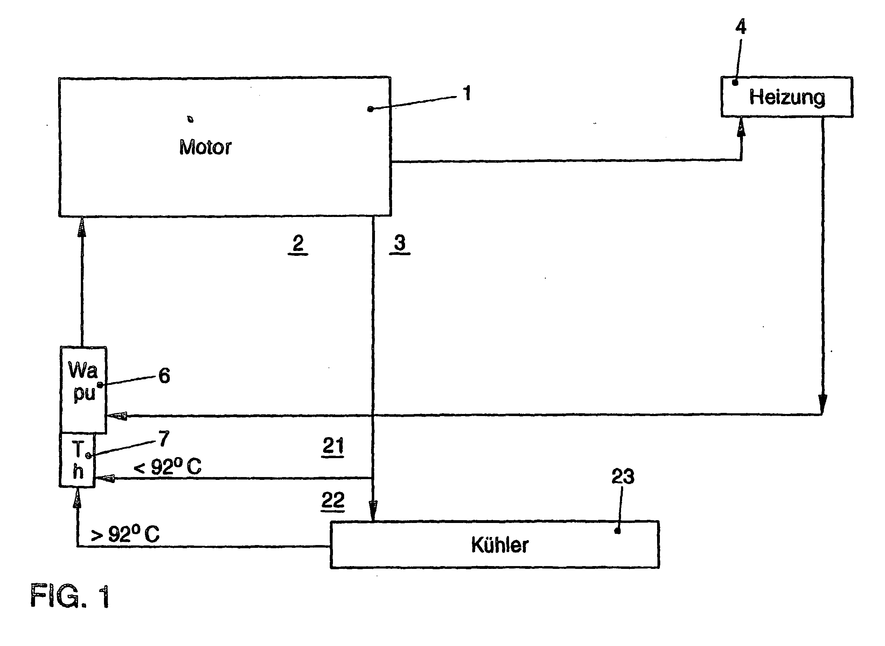

Es ist bekannt, in dem Heizungskreislauf eines Kraftfahrzeugs eine Zusatz-Heizvorrichtung vorzusehen. Bei Einbindung von Zusatz-Heizvorrichtungen- z.B. kraftstoffbetriebene Zuheizer, Glühkerzenheizungen, Abgaswärmetauscher mit und ohne katalytischem Zuheizer, Latentwärmespeicher - in den Heizungskreislauf ist eine einfache Einbindung in den konventionellen Kreislauf nicht sinnvoll., da wegen der geringen luftseitig möglichen Wärmeaufnahme der größte Teil der zusätzlich bereitgestellten Energie in den zu Fahrtbeginn noch kalten Motorblock übertragen wird, vgl. Figur 1. Die mit den beschriebenen Zusatz-Heizvorrichtungen erzielbare Minderung des Kraftstoffverbrauchs durch den schnelleren Warmlauf wird durch die nur geringe Heizleistungszunahme nicht gerechtfertigt.

Aus der Druckschrift DE 34 47 182 A1 ist eine andere Art einer Zusatz-Heizvorrichtung bekannt. Dabei wird eine Heizung für einen Fahrgastraum in Kraftfahrzeugen mit einem Kühlkreislauf für den Motor über ein Stellventil gesteuert und ein Nebenzweig abgeteilt, wobei über diesen Nebenzweig über einen Wärmetauscher der Fahrgastraum erwärmt wird. Zudem offenbart die Druckschrift, um eine schnelle wirksame Erwärmung im Fahrgastraum zu erreichen, einen parallel zum Wärmetauscher im Nebenzweig geschalteten Bypass vorzusehen, der zusammen mit dem Nebenzweig einen eigenständigen Heizkreislauf bildet, in welchem ein elektrischer Heizkörper sowie eine Umwälzpumpe angeordnet sind. Dieser Heizkreislauf ist über ein Drei-Wege-Ventil an den Motorkühlkreis angeschlossen, wobei das Ventil in seiner einen Stellung den Bypass und in seiner anderen Stellung die Verbindungen zum Kühlkreis sperrt. Nachteilig ist dabei, dass starke Schwankungen im abgeteilten Nebenzweig, der die Aufgabe hat, über den Wärmetauscher den Fahrgastraum zu erwärmen, nicht ausreichend schnell genug ausgesteuert werden können. Die technischen Aggregate, die in einem parallel zum Wärmetauscher im Nebenzweig geschalteten Bypass vorgesehen sind und zusammen mit dem Nebenzweig einen eigenständigen Heizkreislauf bilden, in welchem der elektrische Heizkörper sowie die Umwälzpumpe angeordnet sind, sind nicht in der Lage, starke Schwankungen ausreichend schnell und in Abhängigkeit des abströmenden Kühlmittels auszugleichen.

Danach liegt der Erfindung die Aufgabe zugrunde, einen Heizungskreislauf zu schaffen, bei dem die Zusatz-Heizvorrichtung getrennt vom Heizungskreislauf betrieben wird, solange das vom Motor abströmende Kühlmittel noch kalt ist und erst anschließend bei zunehmender Erwärmung des Kühlmittels das Motorkühlmittel in die Fahrzeugheizung eingebunden ist, sowie starke Schwankungen im Heizungskreiskreislauf durch geeignete Maßnahmen so gezielt so beeinflussen, dass diese nicht in verbundene Heizungskreisläufe übertragen werden.

Gemäß der Erfindung wird diese Aufgabe durch ein Verfahren des Anspruchs 1 gelöst.

Zum anderen wird die Aufgabe durch die Merkmale des Anspruchs 3 gelöst.

In bevorzugter Ausgestaltung der Erfindung ist die Zusatz-Heizvorrichtung vom Heizungskreislauf entkoppelt, solange das vom Motor abströmende Kühlmittel noch kalt ist. Erst anschließend, bei zunehmender Erwärmung des Kühlmittels, wird das Motorkühlmittel über die Umschaltvorrichtung in die Fahrzeugheizung eingebunden. Dabei kann die zusätzliche Heizleistung der Zusatzheizvorrichtung über eine Soll- oder Ist-Stellung der Umschaltvorrichtung bei regulierbarer Zusatzheizvorrichtung zurückgefahren werden. So wird sichergestellt, dass nach einem Kaltstart des Kraftfahrzeugs der überwiegende Teil der zusätzlich bereitgestellten Heizleistung der Heizung und nicht dem Motor zugute kommt.

Bei vollständig geöffneter Umschaltvorrichtung wird die Zuheizleistung auf Null reduziert. Zudem erfolgt die Steuerung der Umschaltvorrichtung in Abhängigkeit weiterer Einflussgrößen wie insbesondere eine Außentemperatur und/oder eine Stellung eines Heizungs- und Gebläsereglers der Heizung. In Weiterbildung der Erfindung ist als Umschaltvorrichtung ein aktives Schaltelement vorgesehen.

Es handelt sich bei dem aktiven Schaltelement um ein 4/2-Wege-Servoventil mit elektrischer, hydraulischer oder pneumatischer Betätigung. In dem 4/2-Wege-Servoventil sind vorteilhaft eine Umschaltklappe und an den Kreuzpunkten des Ventils der Umschaltklappe zugeordnete, nicht verklemmbare Endanschläge (Dichtelemente) vorgesehen, die ein Festsetzen der Umschaltklappe bei dichtem Sitz verhindern.

In weiterer Ausgestaltung der Erfindung ist das aktive Schaltelement mit einer Laderückmeldung versehen.

Schließlich sind in Ausgestaltung der Erfindung das aktive Schaltelement, das Rückschlagventil und die Umwälzpumpe zu einem Bauteil zusammengefasst. Je nach Ausführung ist die Zusatz-Heizvorrichtung mit dem aktiven Schaltelement, dem Rückschlagventil und/oder der Umwälzpumpe verblockt.

Dadurch, dass über einen Temperaturfühler die Ist-Temperatur im Kurzschlusskreislauf abgegriffen wird und mit einer vorgegebenen Temperatur (Soll-Temperatur) kennfeldmäßig die Drehzahl, Spannung und/oder die Förderleistung an der im Kurzschlusskreislauf angeordneten Umwälzpumpe vorgegeben wird, bietet die Schaltung die Möglichkeit, die Temperatur im Zirkulationskreislauf vom Motorbetriebszustand in Grenzen zu entkoppeln. Während bei konventioneller Einbindung einer Zusatz-Heizvorrichtung der Kühlmittelfluss etwa proportional zur Motordrehzahl ist, kann über die elektrisch betriebene Umwälzpumpe der Kühlmittelfluss im Kurzschlusskreislauf beliebig eingestellt werden.

Der Vorteil dieser Regelung besteht ferner darin, dass die Temperaturdifferenz vor dem Heizungs-/Wärmetauscher so eingestellt werden kann, dass dem Zusatzheizsystem die in jedem Betriebspunkt höchstmögliche Wärmeenergie entzogen werden kann und Wankungen aus dem Heizungskreislauf nicht in den kleinen Heizungskreislauf übertragen werden.

Ein Ausführungsbeispiel der Erfindung ist in der Zeichnung dargestellt und wird nachfolgend im einzelnen beschrieben. Das Ausführungsbeispiel ist in der Form von Block-Schaltbildern dargestellt. Es zeigen:
- Figur 1: einen herkömmlichen Serien-Heizungskreislauf;
- Figur 2: einen Heizungskreislauf mit heizleistungsoptimiertem Kühlmittelkreislauf nach der Erfindung;
- Figur 3: den in Figur 2 dargestellten Kreislauf mit einer Umschaltklappe im Zuheizbetrieb;
- Figur 4: den in Figur 3 dargestellten Kreislauf mit der Umschaltklappe im konventionellen Betrieb;
- Figur 5: den Aufbau der in den Figuren 3 und 4 dargestellten Umschaltklappe;
- Figur 6: das Schaltbild eines 4/2-Wege-Servoventils;
- Figur 7: die Regelstrategie des heizleistungsoptimierten Kühlmittelkreislaufs;
- Figur 8: die Regelstrategie einer Umwälzpumpe im heizleistungsoptimierten Kühlmittelkreislauf.

Ein Motor 1 eines Kraftfahrzeugs ist Mittelpunkt einerseits eines Kühlmittelkreises 2, andererseits eines Heizungskreislaufs 3.

Der Kühlmittelkreis 2 ist unterteilt in einen kleinen Kreislauf 21 und einen großen Kreislauf 22, die parallel zueinander geschaltet sind. Der große Kreislauf 22 enthält einen Kühler 23. Bestandteil beider Kreisläufe ist eine Wasserpumpe 6, mit der ein Thermostat 7 verbunden ist.

Bestandteil des Heizungskreislaufs 3 ist eine Heizung 4.

Bei der "konventionellen Einbindung", die in Figur 1 dargestellt ist, ist die Heizung 4 in dem Heizungskreislauf 3 ein Abgaswärmetauscher und/oder ein Zuheizer, z.B. in der Form eines kraftstoffbetriebenen Zuheizers, einer Glühkerzenheizung oder eines Latentwärmespeichers.

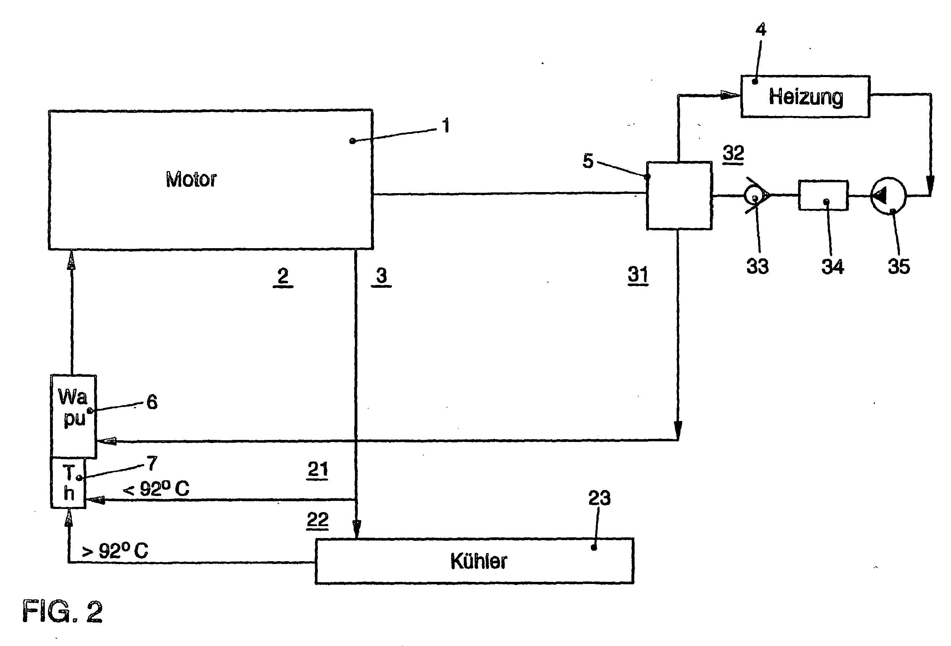

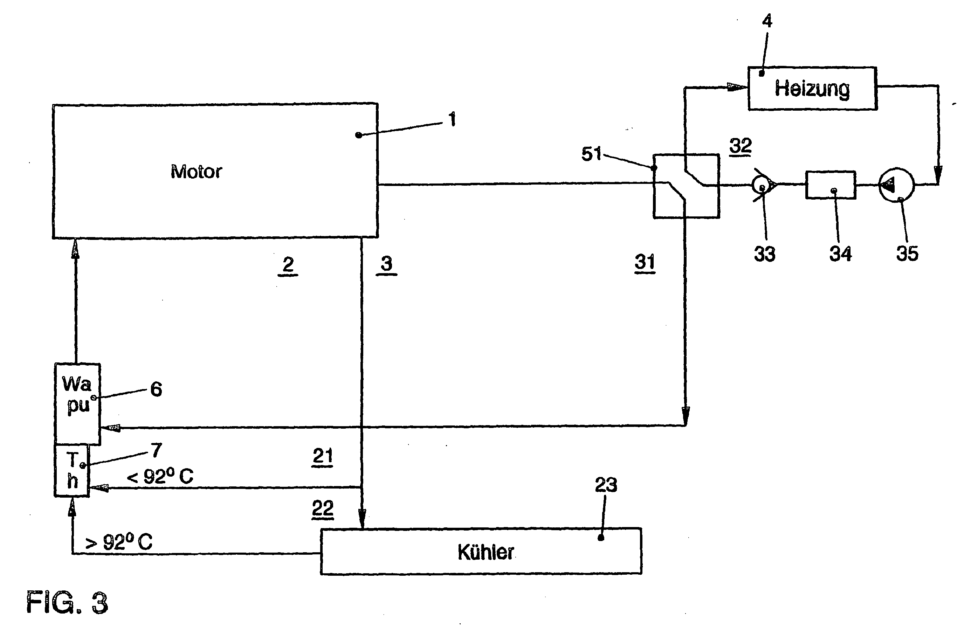

Bei der Erfindung ist der Heizungskreislauf 3 in einen großen Heizungskreis 31 und einen kleinen Heizungskreis 32, auch Kurzschlußkreislauf bezeichnet, geteilt. Am Übergang zwischen dem großen Heizungskreis 31 und dem kleinen Heizungskreis 32 ist eine Umschaltvorrichtung 5 vorgesehen, Figur 2. Die Umschaltvorrichtung 5 ist als aktives Schaltelement vorgesehen. Es hat im Ausführungsbeispiel die Form eines 4/2-Wege-Servoventil 51 mit elektrischer, hydraulischer oder pneumatischer Betätigung, Figuren 3 bis 6.

Der kleine Heizungskreis 32 weist die Heizung 4 in der Form eines Abgaswärmetauschers auf. In Reihe mit der Heizung 4 sind ein Rückschlagventil 33, eine Zusatz-Heizvorrichtung 34 und eine Umwälzpumpe 35 vorgesehen. Die Zusatz-Heizvorrichtung 34 ist z. B. ein kraftstoffbetriebener Zuheizer, eine Glühkerzenheizung oder ein Latentwärmespeicher. Die Umwälzpumpe 35 und die Zusatz-Heizvorrichtung 34 sind - wie dargestellt - im Rücklauf der Heizung 4 vor der Umschaltvorrichtung 5 angeordnet. Sie können aber auch hinter der Umschaltvorrichtung 5 im Vorlauf der Heizung 4 angeordnet sein. Das Rückschlagventil 33 ist im Rücklauf der Heizung 4 angeordnet.

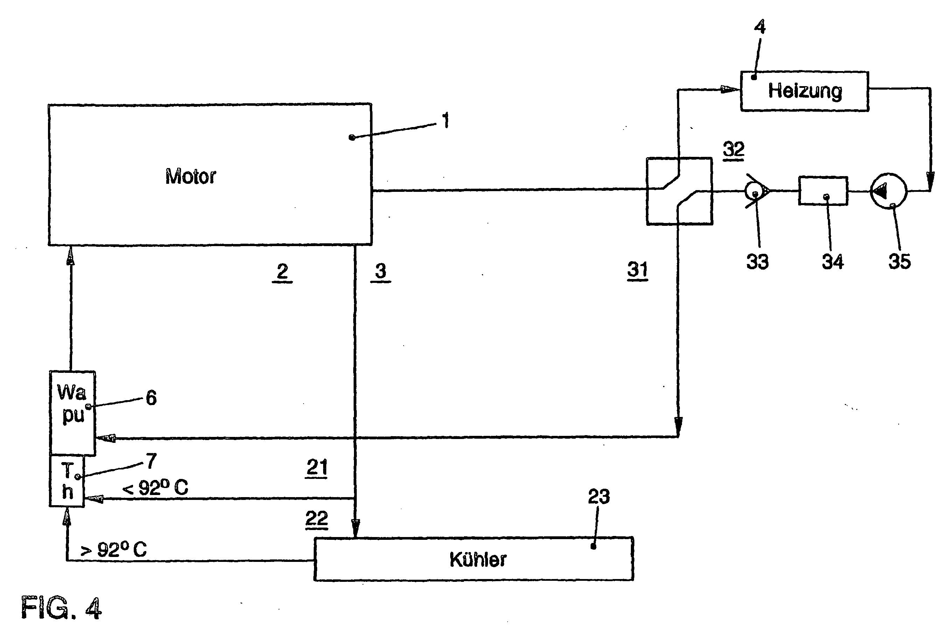

Die Umschaltvorrichtung 5 ist von Zuheizbetrieb - kaltes Motorkühlmittel, Figur 3 - auf konventionellen Betrieb - warmes Motorkühlmittel, Figur 4 - umschaltbar.

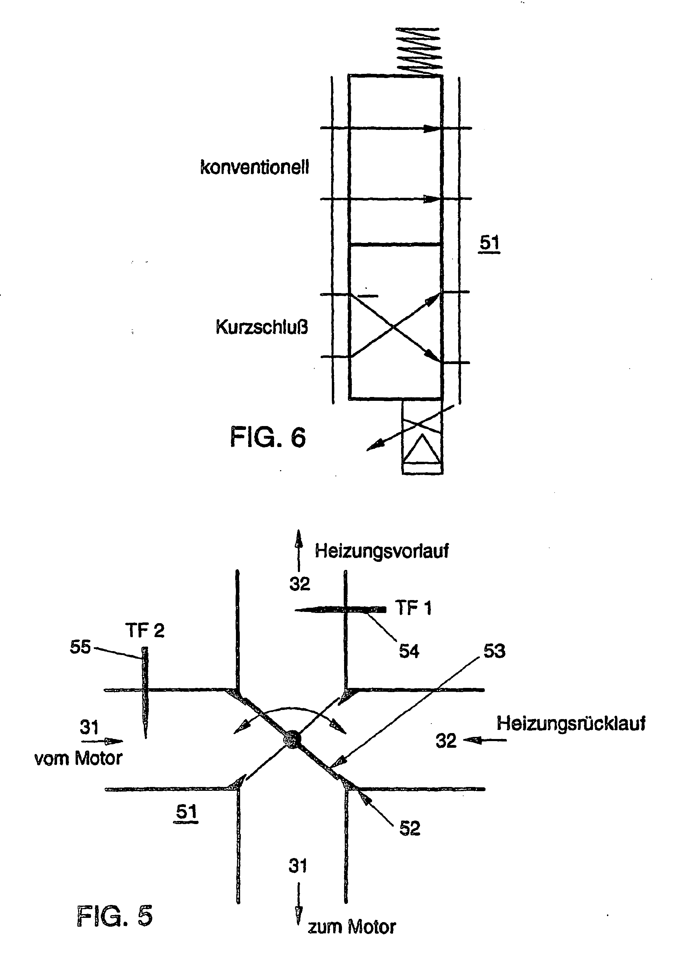

Die Umschaltvorrichtung 5 ist als 4/2-Wege-Servoventil 51 mit elektrischer, hydraulischer oder pneumatischer Betätigung vorgesehen, Figuren 3 und 4. Das Ventil 51 ist mit einer Lagerückmeldung ausgestattet. In dem Ventil 51 ist eine Umschaltklappe 53 für die Umschaltung vom konventionellen Betrieb auf Kurzschlußbetrieb und umgekehrt vorgesehen , Figuren 5 und 6. An den Kreuzpunkten des Ventils sind der Umschaltklappe 53 zugeordnete nicht verklemmbare Endanschläge 52 - Dichtelemente - vorgesehen. Das Ventil 51 weist zwei Anschlüsse für die Verbindung mit dem großen Heizungskreis 31 - vom Motor einerseits und zum Motor andererseits - sowie zwei Anschlüsse für die Verbindung mit dem kleinen Heizungskreis 32 auf - Heizungsvorlauf und Heizungsnachlauf -. Für jeden der beiden Heizungskreise weist das Ventil einen Temperaturfühler 54 und 55 auf, von denen der eine dem kleinen Heizungskreis 32 und der andere dem großen Heizungskreis 31 zugeordnet ist.

Die Umschaltklappe 53, das Rückschlagventil 33 und die Umwälzpumpe 35 können in einem Bauteil zusammengefaßt werden. Je nach Ausführung ist auch eine Verblockung der Zusatzheizvorrichtung 34 mit den genannten Bauelementen möglich.

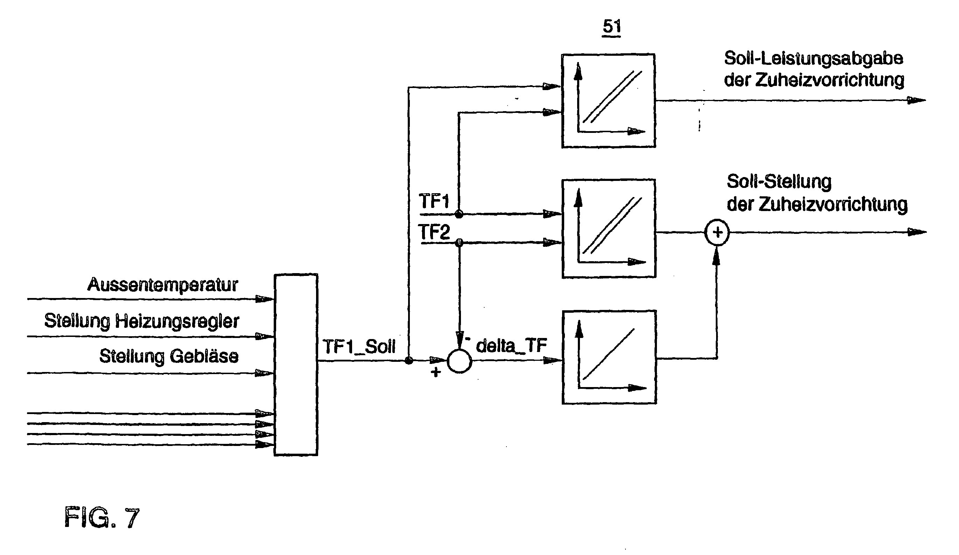

Die Umschaltklappe 53 wird über die Temperaturfühler 54, 55 gesteuert - Figuren 5 bis 7 -. Abhängig von den Absoluttemperaturen TF1 und TF2 der Temperaturfühler 54 und 55 wird die Umschaltklappe 53 zunächst kennfeldmäßig gar nicht oder nur geringfügig geöffnet, um höchstens einen Teilstrom des Motorkühlmittels in den kleinen Heizungskreis 32 - Kurzschlußkreislauf - einströmen zu lassen. Beim Öffnen der Umschaltklappe 53 bewegt sich die Temperatur TF1 an dem Temperaturfühler 54 in einer applizierbaren Bandbreite, um beim Phase-Out der Zuheizmaßnahme im Vorlauf der Heizung stets etwa dieselbe Temperatur zu halten. Über die Soll- oder Ist-Stellung der Umschaltklappe 53 wird bei regulierbaren Zuheiz-Vorrichtungen 34 die Zuheizleistung zurückgefahren. Bei vollständig umgelegter Umschaltklappe 53 - konventioneller Kühlmittelfluß - ist die Leistung der Zuheiz-Vorrichtung 34 auf Null reduzierbar, vgl. Figur 6.

Zusätzlich können weitere Einflußfaktoren, wie Außentemperatur, Stellung des Heizungsund Gebläsereglers, Außentemperatur usw. Einfluß auf die Stellung der Umschaltvorrichtung 51 haben.

Vorzugsweise ist die Steuerung der Umschaltklappe 53 so ausgelegt, daß bei Außentemperaturen bis herab zu etwa 0°C bis zu einer Motorkühlmitteltemperatur TF2 von etwa 40°C die Umschaltklappe 53 vollkommen geschlossen ist und bei Anstieg der Motorkühlmitteltemperatur bis auf etwa 70°C vollkommen geöffnet wird. Bei noch niedrigeren Außentemperaturen sinken diese beiden charakteristischen Werte vorzugsweise um etwa die Hälfte des Absolutbetrages der Außentemperatur, so daß demnach bei -30°C Außentemperatur der Beginn der Umschaltklappenöffnung bei (40 - ³⁰/₂)°C = 25 °C und das Ende der Umschaltklappenvorrichtung bei 55°C liegt.

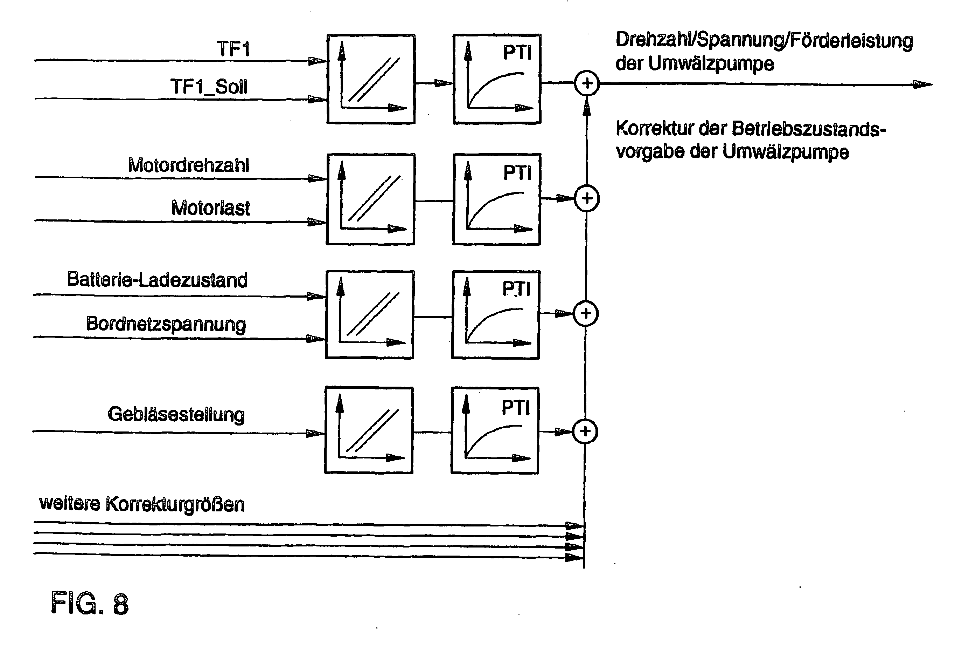

Die bisher beschriebene Schaltung bietet zusätzlich die Möglichkeit, die Temperatur im Zirkulationskreislauf vom Motorbetriebszustand in Grenzen zu entkoppeln. Während bei konventioneller Einbindung einer Zuheizvorrichtung der Kühlmittelfluß etwa proportional zur Motordrehzahl ist, kann über die elektrisch betriebene Umwälzpumpe 35 der Kühlmittelfluß in dem kleineren Heizungskreis 32 - Kurzschlußkreislauf - beliebig eingestellt werden. Dazu wird über den Temperaturfühler 54, der die Temperatur TF1 mißt, die Ist-Temperatur im kleinen Heizungskreis 32 abgegriffen, Figuren 5 und 8. Mit der vorgegebenen Temperatur TF1-Soll wird kennfeldmäßig eine Drehzahl, Spannung und/oder Förderleistung an der Umwälzpumpe 35 vorgegeben, wobei dieser Wert wegen der Totzeiten durch den Kühlmittelumlauf und die hohe thermische Trägheit des Kühlmittels nur gedämpft an die Umwälzpumpe 35 weitergeleitet wird. Überdies kann eine - ggf. gedämpfte - Korrektur dieses Wertes über den Motorbetriebszustand - Motordrehzahl, Motorlast - (bei Abgaswärmetauscher, Latentwärmespeicher, Glühkerzenheizung) Batterie-Ladezustand und/oder Bordnetzspannung,, Dauer des Zusatzbetriebs (bei kraftstoffbetriebenem Zuheizer), Gebläsestellung (alle Zuheizvorrichtungen) sowie weitere Korrekturgrößen erfolgen.

Der Vorteil der Regelung ist darin zu sehen, daß die Temperaturdifferenz vor dem Heizungs-Wärmetauscher so eingestellt werden kann, daß dem Zuheizsystem die in jedem Betriebspunkt höchstmögliche Wärmemenge entzogen werden kann.

### BEZUGSZEICHENLISTE

- 1: Motor
- 2: Kühlmittelkreis
21 kleiner Kreislauf
22 großer Kreislauf
23 Kühler
- 3: Heizungskreislauf
31 großer Heizungskreis
32 kleiner Heizungskreis (Kurzschlußkreislauf)
33 Rückschlagventil
34 Zusatz-Heizvorrichtung
35 Umwälzpumpe
- 4: Heizung
- 5: Umschaltvorrichtung
51 Servoventil
52 Endanschläge
53 Umschaltklappe
54 Temperaturfühler
55 Temperaturfühler
- 6: Wasserpumpe
- 7: Thermostat

## Patentansprüche

1. Verfahren zur Steuerung eines Heizungskreislaufs (3) einer Heizung (4) für Kraftfahrzeuge, wobei der Heizungskreislauf (3) einen ersten, einen Motor (1) und einen Kühler (23) umfassenden Heizungskreislauf (31) und einen gesonderten, eine Zusatz-Heizvorrichtung (34) und die Heizung (4) umfassenden Kurzschlusskreislauf (32) einschließt, wobei der Kurzschlusskreislauf (32) durch Öffnen einer Umschaltvorrichtung (5) in den ersten Heizungskreislauf (31) schaltbar ist, **dadurch gekennzeichnet, dass** die Umschaltvorrichtung (5) ein 4/2-Wege-Servoventil mit elektrischer, hydraulischer oder pneumatischer Betätigung ist und über zwei dem Kurzschlusskreislauf (32) und dem ersten Heizungskreislauf (31) zugeordnete Temperaturfühler (54, 55) kennfeldmäßig gesteuert wird, wobei die Umschaltvorrichtung (5) in Abhängigkeit von mittels der Temperaturfühler (54, 55) gemessenen Absoluttemperaturen (TF1, TF2) zunächst gar nicht oder nur geringfügig geöffnet wird und beim Öffnen der Umschaltvorrichtung (5) die in dem Kurzschlusskreislauf (32) gemessene Absolut-Temperatur (TF1) in einer applizierbaren Bandbreite bewegt wird, und dass bei regulierbarer Zusatz-Heizvorrichtung (34) über eine Soll- oder Ist-Stellung der Umschaltvorrichtung (5) eine Zuheizleistung zurückgefahren wird und bei vollständig geöffneter Umschaltvorrichtung (5) die Zuheizleistung auf Null reduziert wird.

2. Verfahren nach Anspruch 1, **dadurch gekennzeichnet, dass** die Steuerung der Umschaltvorrichtung (5) in Abhängigkeit weiterer Einflussgrößen, insbesondere einer Außentemperatur und/oder einer Stellung eines Heizungs- und Gebläsereglers der Heizung (4) erfolgt.

3. Verfahren zur Steuerung eines Heizungskreislaufs (3) einer Heizung (4) für Kraftfahrzeuge, wobei der Heizungskreislauf (3) einen ersten, einen Motor (1) und einen Kühler (23) umfassenden Heizungskreislauf (31) und einen gesonderten, eine Zusatz-Heizvorrichtung (34) und die Heizung (4) umfassenden Kurzschlusskreislauf (32) einschließt, wobei der Kurzschlusskreislauf (32) durch Öffnen einer Umschaltvorrichtung (5) in den ersten Heizungskreislauf (31) schaltbar ist, **dadurch gekennzeichnet, dass** als Umschaltvorrichtung (5) ein 4/2-Wege-Servoventil mit elektrischer, hydraulischer oder pneumatischer Betätigung vorgesehen ist, und dass über einen Temperaturfühler (54) eine IstTemperatur (TF1) im Kurzschlusskreislauf (32) abgegriffen wird, und mit einer vorgegebenen Temperatur (TF1-Soll) kennfeldmäßig eine Drehzahl, Spannung und/oder Förderleistung an einer im Kurzschlusskreislauf (32) angeordneten Umwälzpumpe (35) vorgegeben wird.

4. Verfahren nach Anspruch 3, **dadurch gekennzeichnet, dass** das aktive Schaltelement mit einer Lagerückmeldung versehen ist.

5. Verfahren nach einem der Ansprüche 3 oder 4, **dadurch gekennzeichnet, dass** das 4/2-Wege-Servoventil eine Umschaltklappe (53) und an Kreuzpunkten des Ventils der Umschaltklappe (53) zugeordnete nichtverklemmbare Endanschläge (52) aufweist, und die Umschaltklappe (53) kennfeldmäßig gesteuert wird.

## Claims

1. Method for controlling a heating circuit (3) for a heater (4) for motor vehicles, wherein the heating circuit (3) provides a primary heating circuit (31) comprising a motor (1) and a cooler (23) and a separate, shorted circuit (32) comprising a supplementary heating device (34) and the heater (4), wherein the shorted circuit (32) can be connected into the primary heating circuit (31) by opening a switching device (5), **characterised in that** the switching device (5) is a 4/2-way servo-valve with electrical, hydraulic or pneumatic activation and is controlled with reference to a map of characteristics via two temperature sensors (54, 55) allocated to the shorted circuit (32) and the primary heating circuit (31), wherein the switching device (5) is initially not opened at all or only opened slightly in dependence upon absolute temperatures (TF1, TF2) measured by means of the temperature sensors (54, 55), and that on opening the switching device (5), the absolute temperature (TF1) measured in the shorted circuit (32) is moved within an applicable bandwidth and that in the case of a supplementary heating device (34) capable of regulation, a supplementary heating output is reduced via a target or actual setting of the switching device (5) and the supplementary heating output is reduced to zero when the switching device (5) is completely opened.

2. Method according to claim 1, **characterised in that** the switching device (5) is controlled in dependence upon further influencing parameters, in particular, an external temperature and/or a position of a heater and fan regulator of the heater (4).

3. Method for controlling a heating circuit (3) of a heater (4) for motor vehicles, wherein the heating circuit (3) provides a primary heating circuit (31) comprising a motor (1) and a cooler (23) and a separate shorted circuit (32) comprising a supplementary heating device (34) and the heater (4), wherein the shorted circuit (32) can be connected into the primary heating circuit (31) by opening a switching device (5), **characterised in that** a 4/2-way servo-valve with electrical, hydraulic or pneumatic activation is provided as the switching device (5), and that an actual temperature (TF1) in the shorted circuit (32) is picked up by a temperature sensor (54), and that, at a pre-selected temperature (TF1-target), a rotational speed, voltage and/or pumping output is pre-selected in a circulation pump (35) arranged in the shorted circuit (32) with reference to a map of characteristics.

4. Method according to claim 3, **characterised in that** the active switching element is provided with a position feedback message.

5. Method according to any one of claims 3 or 4 **characterised in that** the 4/2-way servo-valve provides a switching flap (53) and non-jamming end-stops (52) allocated at crossing points of the valve of the switching flap (53), and that the switching flap (53) is controlled with reference to a map of characteristics.

## Revendications

1. Procédé pour commander un circuit de chauffage (3) d'un dispositif de chauffage (4) pour véhicules à moteur, dans lequel le circuit de chauffage (3) englobe un premier circuit de chauffage (31) comprenant un moteur (1) et un radiateur (23) et un circuit court-circuité (32) séparé comprenant un dispositif de chauffage auxiliaire (34) et le dispositif de chauffage (4), dans lequel le circuit court-circuité (32) peut être commuté dans ou vers le premier circuit de chauffage (31) en ouvrant un commutateur (5), **caractérisé en ce que** le commutateur (5) est une servovanne à 4/2 voies à commande électrique, hydraulique ou pneumatique et est commandé selon un diagramme caractéristique par le biais de deux sondes de température (54, 55) associées au circuit court-circuité (32) et au premier circuit de chauffage (31), le commutateur (5) n'étant tout d'abord pas ou seulement légèrement ouvert en fonction de températures absolues (TF1, TF2) mesurées par les sondes de température (54, 55) et, lors de l'ouverture du commutateur (5), la température absolue (TF1) mesurée dans le circuit court-circuité (32) variant dans une largeur de bande applicable, et **en ce que**, dans le cas d'un dispositif de chauffage auxiliaire (34) réglable, une position théorique ou réelle du commutateur (5) permet de ramener une puissance de chauffe additionnelle et, lorsque le commutateur (5) est entièrement ouvert, la puissance de chauffe additionnelle est réduite à zéro.

2. Procédé selon la revendication 1, **caractérisé en ce que** la commande du commutateur (5) s'effectue en fonction d'autres grandeurs d'influence, notamment en fonction d'une température extérieure et/ou d'une position d'un bouton de réglage du chauffage et de la soufflerie du dispositif de chauffage (4).

3. Procédé pour commander un circuit de chauffage (3) d'un dispositif de chauffage (4) pour véhicules à moteur, dans lequel le circuit de chauffage (3) englobe un premier circuit de chauffage (31) comprenant un moteur (1) et un radiateur (23) et un circuit court-circuité (32) séparé comprenant un dispositif de chauffage auxiliaire (34) et le dispositif de chauffage (4), dans lequel le circuit court-circuité (32) peut être commuté dans ou vers le premier circuit de chauffage (31) en ouvrant un commutateur (5), **caractérisé en ce qu'**il est prévu en tant que commutateur (5) une servovanne à 4/2 voies à commande électrique, hydraulique ou pneumatique et **en ce qu'**une sonde de température (54) relève une température réelle (TF1) dans le circuit court-circuité (32), et **en ce qu'**à une température prédéfinie (TF1 théorique), une vitesse de rotation, une tension et/ou un débit est affecté(e) selon un diagramme caractéristique à une pompe de circulation (35) placée dans le circuit court-circuité (32).

4. Procédé selon la revendication 3, **caractérisé en ce que** l'élément logique actif est équipé d'un moyen de signalisation en retour de la position.

5. Procédé selon l'une quelconque des revendications 3 ou 4, **caractérisé en ce que** la servovanne à 4/2 voies présente un volet directionnel (53) et à des intersections de la vanne des butées d'arrêt (52) qui ne provoquent pas de blocage et qui sont associées au volet directionnel (53), et **en ce que** le volet directionnel (53) est commandé selon un diagramme caractéristique.
